# EUROPÄISCHE PATENTANMELDUNG

(11) **EP 4 173 610 A1**
(43) Veröffentlichungstag der Anmeldung: **03.05.2023**
(21) Anmeldenummer: 21205497.7
(22) Anmeldetag: 29.10.2021
(51) Int. Cl.: A61G 15/16, A61C 3/00, A61C 19/00

(54) **MECHANIK ZUR MONTAGE UND DEMONTAGE DER GRIFFE/INSTRUMENTENABLAGE DES ARZTELEMENTS**

(71) Anmelder: Dentsply Sirona Inc., York, PA 17401 (US); Sirona Dental Systems GmbH, 64625 Bensheim (DE)
(72) Erfinder: RACKEBRANDT, Thorsten, 64625 Bensheim (DE); BÄTHGE, Tobias, 64625 Bensheim (DE)
(74) Vertreter: Özer, Alpdeniz

(57) **Zusammenfassung**

Die vorliegende Erfindung betrifft eine Dentale Behandlungseinheit (1) mit einem beweglichem Arztelement (2) umfassend: mindestens ein entnehmbarer Griff (3) zum Bewegen des selben; eine entnehmbare Instrumentenablage (4) zum Ablegen von Instrumenten (5); ein erster Entriegelungsmechanismus (6) zum Entriegeln des Griffs (3); ein zweiter Entriegelungsmechanismus (7) zum Entriegeln der Instrumentenablage (4); gekennzeichnet dadurch, dass das Arztelement (2) ein bewegliches Betätigungselement (8) aufweist, welches in einer vorbestimmenden Richtung (P) bewegt werden kann, um den ersten Entriegelungsmechanismus (6) zu betätigen und den Griff (3) zu entriegeln, und in einer, der vorbestimmenden Richtung (P) entgegen gesetzten Richtung (P') bewegt werden kann, um den zweiten Entriegelungsmechanismus (7) zu betätigen und die Instrumentenablage (4) zu entriegeln.

## Beschreibung

### TECHNISCHES GEBIET DER ERFINDUNG

Die vorliegende Erfindung bezieht sich auf dentale Behandlungseinheiten insbesondere auf das Artelement.

### HINTERGRUND DER ERFINDUNG

Beim Patientenwechsel in einer Dentalpraxis ist es erforderlich, dass das Arztelement (Tablett) an kritischen Flächen möglichst intensiv gereinigt und hygienisch aufbereitet werden kann, um eine Übertragung von Keimen zwischen Personen, Anwender & Patienten zu vermeiden. Aus diesem Grund sind die Griffe aktueller Arztelemente abnehmbar gestaltet, um eine Thermodesinfektion der Griffe zu ermöglichen. Alternativ werden die Griffe mit Silikonüberzieher geschützt. Eine aktuelle bekannte Mechanik für die Montage und Demontage des Arztelements besteht aus einem hülsenförmigen Griff und einer Verrastung auf einem hornförmigem Träger am Arztelement.

Die Instrumentenablage dient der sicheren Positionierung der elektrisch und hydropneumatisch betriebenen Instrumente. Aus Gründen der Hygiene ist die Instrumentenablage ebenfalls entnehmbar gestaltet, um in einem Thermodesinfektor hygienisch aufbereitet werden zu können.

Die Hygiene der Arztelemente und Instrumentenablage einer Behandlungseinheit ist von entscheidender Bedeutung für die zahnärztliche Arbeit. Im Stand der Technik gibt es das Problem, dass die separaten Verriegelungselemente für die die Montage und Demontage des Griffs des Arztelements und Instrumentenablage eine eingeschränkte Bedienbarkeit haben und das Kontaminationsrisiko erhöhen.

### OFFENBARUNG DER ERFINDUNG

Aktuell ist den Erfindern keine Behandlungseinheiten aus Stand der Technik bekannt bei dem ein Betätigungselement, welches der Griff-Entriegelung dient, ebenfalls genutzt werden kann, um die Instrumentenablage zu entriegeln. Somit kann das Betätigungselement mit einer doppelten Funktion versehen werden, um die Bedienbarkeit zu verbessern und das Kontaminationsrisiko zu reduzieren.

Ziel der Erfindung ist eine Behandlungseinheit bereitzustellen bei dem die Griff-Entriegelung und die Instrumentenablage-Entriegelung mittels ein gemeinsames Betätigungselement wahlweise einfach durchgeführt werden kann.

Dieses Ziel wird durch die dentale Behandlungseinheit nach Anspruch 1 erreicht. Die Gegenstände der abhängigen Ansprüche beziehen sich auf bevorzugte Ausführungformen bzw. auf Weiterentwicklungen.

Die erfindungsgemäße dentale Behandlungseinheit hat ein bewegliches Arztelement. Das Arztelement umfasst: mindestens ein entnehmbaren Griff zum Bewegen desselben; eine entnehmbare Instrumentenablage zum Ablegen von Instrumenten; ein erster Entriegelungsmechanismus zum Entriegeln des Griffs; ein zweiter Entriegelungsmechanismus zum Entriegeln der Instrumentenablage. Das Arztelement weist ein bewegliches Betätigungselement auf, welches in einer vorbestimmenden Richtung bewegt werden kann, um den ersten Entriegelungsmechanismus zu betätigen und den Griff zu entriegeln, und in einer, der vorbestimmenden Richtung entgegen gesetzten Richtung bewegt werden kann, um den zweiten Entriegelungsmechanismus zu betätigen und die Instrumentenablage zu entriegeln.

Ein wesentlicher vorteilhafter Effekt der vorliegenden Erfindung ist, dass die erfindungsgemäße dentale Behandlungseinheit mittels eines gemeinsamen Betätigungselements wahlweise den Griff oder die Instrumentenablage entriegeln lässt und somit gegenüber den bekannten Behandlungseinheiten leichter und sicher bedienbar ist. Das Betätigungselement, welches der Griff-Entriegelung dient, wird ebenfalls genutzt, um die Instrumentenablage zu entriegeln. Somit ist das Betätigungselement mit einer doppelten Funktion versehen.

Das wesentliche Merkmal der Erfindung ist die Nutzung eines gemeinsamen Betätigungselements, das in zwei verschiedenen Richtungen betätigt werden kann, um die Entriegelungsmechanismen zu betätigen. Hierzu kann der Fachmann aus dem Stand der Technik bekannte verschiedene beliebige Entriegelungsmechanismen verwenden.

In einer vorteilhaften Ausführungsform weist der erster Entriegelungsmechanismus eine Rastmechanik auf, die vorzugsweise aus einer federgespannten Torsionsnocke mit einer Rastnase und einer Einrastkerbe auf dem Griffschaft besteht. Zur Entriegelung wird mit dem Betätigungselement die Torsionsnocke gedreht. Die Rastmechanik wirkt selbstverstärkend. Die Rastnase hat vorzugsweise eine gebogene Form, so dass die Rastmechanik toleranzausgleichend und spielreduzierend wirkt. Das Betätigungselement kann wie ein Hebel drehbar gelagert werden. Alternativ kann es auch verschiebbar gelagert werden.

In einer weiteren vorteilhaften Ausführungsform weist der zweite Entriegelungsmechanismus eine Ratsmechanik auf, die vorzugsweise aus einem Biegeelement mit einer Rastnase und einer Einrastöffnung an der Instrumentenablage besteht. Zur Entriegelung wird mit dem Betätigungselement das Biegeelement gedehnt.

In einer weiteren vorteilhaften Ausführungsform hat der erster Entriegelungsmechanismus vorzugsweise zusätzlich eine Auswurffunktion, um den Griff beim entriegelten Zustand auszuwerfen. Dies wird durch eine Federelement verwirklicht.

In einer weiteren vorteilhaften Ausführungsform hat der zweiter Entriegelungsmechanismus vorzugsweise zusätzlich auch eine Auswurffunktion, um die Instrumentenablage beim entriegelten Zustand auszuwerfen. Dies wird auch durch ein Federelement verwirklicht.

In einer weiteren vorteilhaften Ausführungsform dringt der Griffschaft mit einen Vorsprung beim verriegelten Zustand des Griffs formschlüssig in eine Aussparung im Arztelement hinein. Dadurch ist ein spielminimierter und gegen Drehung gesicherten Sitz im verriegelten Zustand ermöglicht.

In einer weiteren vorteilhaften Ausführungsform wird der Griffschaft durch die federbelasteten Rastmechanik, z.B. die Torsionsnocke gegen einen Konus gezogen welches ein formschlüssiges Aufsitzen ermöglicht. Dadurch ist ein spielminimierter Sitz durch den konischen Anschlag ermöglicht. Dies ermöglicht zugleich eine toleranzausgleichende Griffmechanik.

In einer weiteren Ausführungsform ist das Betätigungselement auf der vom Griff abgewandten Seite des Arztelements vorzugsweise auf der unteren Seite des Arztelements angeordnet. Diese räumliche Trennung von Griff und Betätigungselement bzw. Auslöser, ermöglicht dass bei abgenommenem Griff im Bereich der Griffaufnahme der vollständige Greifbereich einfacher gereinigt werden kann. Der Griff und die Ablage können thermodesinfiziert werden. Die Fernauslösung bzw. Entriegelung des Griffs ist somit weit entfernt vom Griff, der hygienisch kritisch ist. Daher ist eine Kreuzkontamination des Griffes durch den Griffauslöser bzw. Betätigungselement nicht möglich bzw. sehr gering.

### KURZBESCHREIBUNG DER ZEICHNUNGEN

In der nachfolgenden Beschreibung wird die vorliegende Erfindung anhand von beispielhaften Ausführungsformen und unter Bezugnahme auf die Zeichnungen näher erläutert, wobei
Abb. 1 - zeigt eine dentale Behandlungseinheit gemäß einer Ausführungsform der vorliegenden Erfindung;
Abb. 2 - zeigt ein Arztelement und Instrumentenablage der dentalen Behandlungseinheit aus Abb.l;
Abb. 3 - zeigt ein Arztelement und Instrumentenablage der dentalen Behandlungseinheit aus Abb.1, wobei die Griffe entnommen wurden;
Abb. 4 - zeigt eine Querschnittsdarstellung des Arztelements und der Instrumentenablage der dentalen Behandlungseinheit aus Abb.2;
Abb. 5 - zeigt eine Querschnittsdarstellung des Arztelements und der Instrumentenablage der dentalen Behandlungseinheit aus Abb.2, wobei das Betätigungselement in einer ersten Richtung betätigt wird um den Griff zu Entriegeln;
Abb. 6 - zeigt eine Querschnittsdarstellung des Arztelements und der Instrumentenablage der dentalen Behandlungseinheit aus Abb.2, wobei der Griff nach der Entriegelung entnommen wurde;
Abb. 7 - zeigt eine Querschnittsdarstellung des Arztelements und der Instrumentenablage der dentalen Behandlungseinheit aus Abb.2, wobei das Betätigungselement in einer der ersten Richtung entgegengesetzte zweiten Richtung betätigt wird, um die Instrumentenablage zu Entriegeln;
Abb. 8 - zeigt eine Querschnittsdarstellung des Arztelements und der Instrumentenablage der dentalen Behandlungseinheit aus Abb.2, wobei die Instrumentenablag nach der Entriegelung entnommen wurde;
Abb. 9 - zeigt eine perspektivische Ansicht des Arztelements und der Instrumentenablage der dentalen Behandlungseinheit aus Abb.2, wobei die Instrumentenablag nach der Entriegelung entnommen wurde.

Die in den Zeichnungen gezeigten Referenznummern bezeichnen die unten aufgeführten Elemente, auf die in der nachfolgenden Beschreibung der beispielhaften Ausführungsformen Bezug genommen wird.
- 1.: Dentale Behandlungseinheit
- 2,2': Arztelement, Assistenzelement
- 3.: Griff
- 4.: Instrumentenablage
- 5.: Instrument
- 6: Erster Entriegelungsmechanismus
- 7.: Zweiter Entriegelungsmechanismus
- 8.: Betätigungselement
- 9.: Torsionsnocke
- 10.: Rastnase
- 11.: Einrastkerbe (Öffnung)
- 12.: Schaft
- 13.: Biegeelement
- 14.: Rastnase
- 15.: Einrastkerbe (Öffnung)
- 16.: Federelement
- 17.: Federelement
- 18.: Vorsprung
- 19.: Aussparung
- 20.: Konischer Wand Teil
- 21.: Konischer Gegenwand Teil
- 22.: Patientenstuhl
- 23.: Stuhlbasis
- 24.: Wassereinheit
- 25.: Bedienoberfläche
- 26.: Fußschalter
- 27.: Instrumentenschläuche
- 28.: Saugschläuche
- 29.: Kupplungen
- 30.: Griffaufnahme

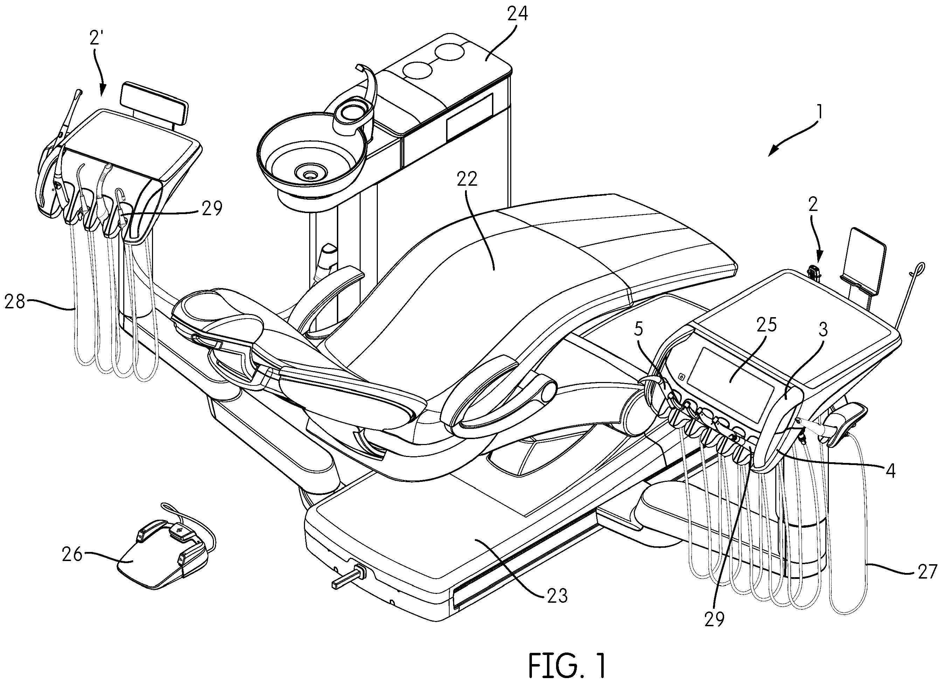

Abb. 1 zeigt teilweise eine erfindungsgemäße dentale Behandlungseinheit (1) nach einer Ausführungsform. Die dentale Behandlungseinheit (1) umfasst einen Patientenstuhl (22) mit einer Stuhlbasis (23), eine Wassereinheit (24), ein Assistenzelement (2'), ein Arztelement (2) vorzugsweise mit einer Bedienoberfläche (25), und einen Fußschalter (26). Die Wassereinheit (24) ist in Abb. 1 auf der linken Seite des Patientenstuhl (22) angeordnet. Sie kann auch auf der rechten Seite des Patientenstuhls (22) angeordnet werden. Mittels der Wassereinheit (24) können u.a. auch Reinigungsprozesse durchgeführt werden. Die integrierten Reinigungsprozesse sollen es den Anwendern der erfindungsgemäßen Behandlungseinheit (1) erleichtern, die Kupplungen (29) und Schläuche (27,28) der Instrumente (5) hygienisch zu halten.

Zahnärztliche Behandlungseinheiten (1) sind dem Fachmann allgemein aus dem Stand der Technik weitgehend bekannt, daher wird auf weitere Details verzichtet, um die Beschreibung nicht unnötig zu verlängern. In der folgenden Beschreibung wird das Arztelement (2) im Detail erklärt.

### Arztelement

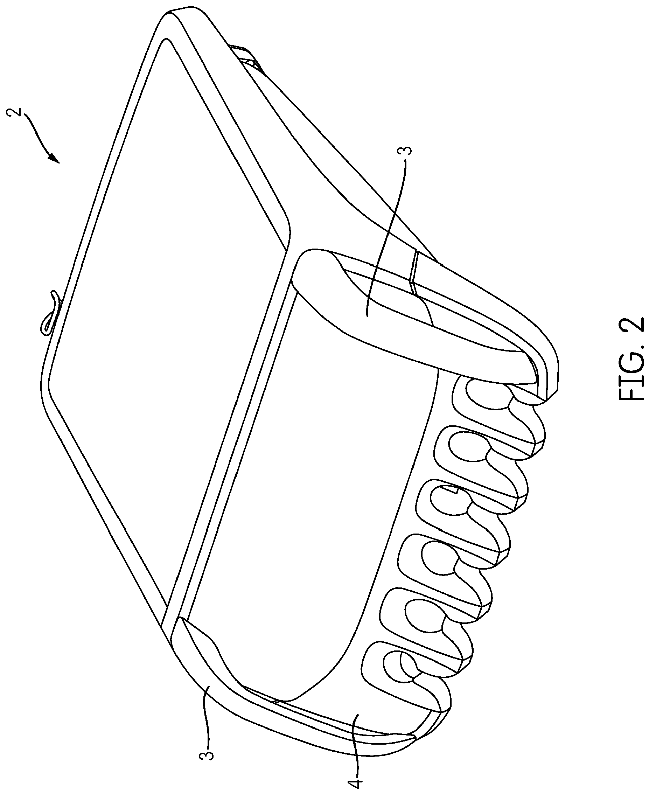

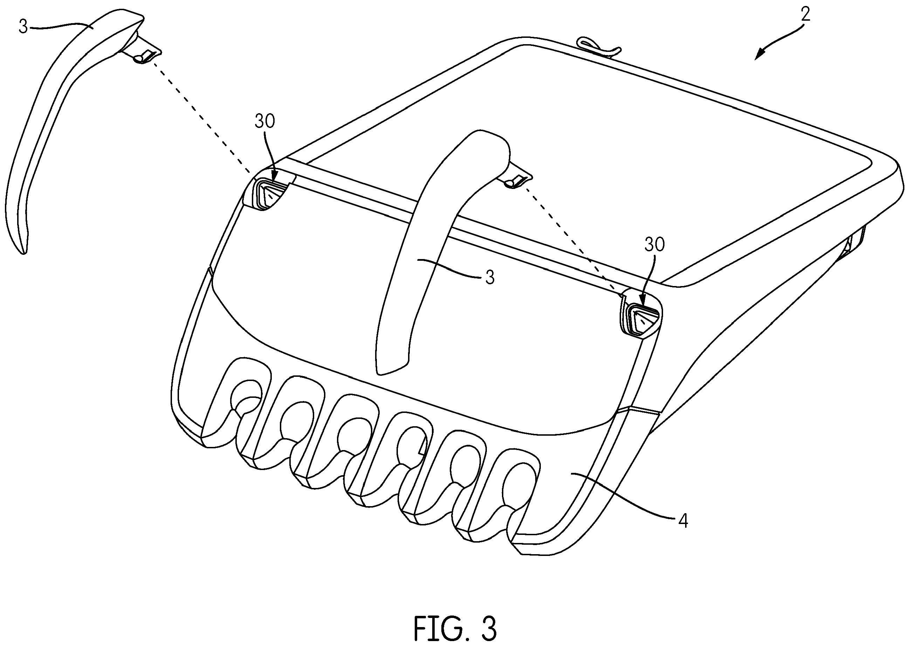

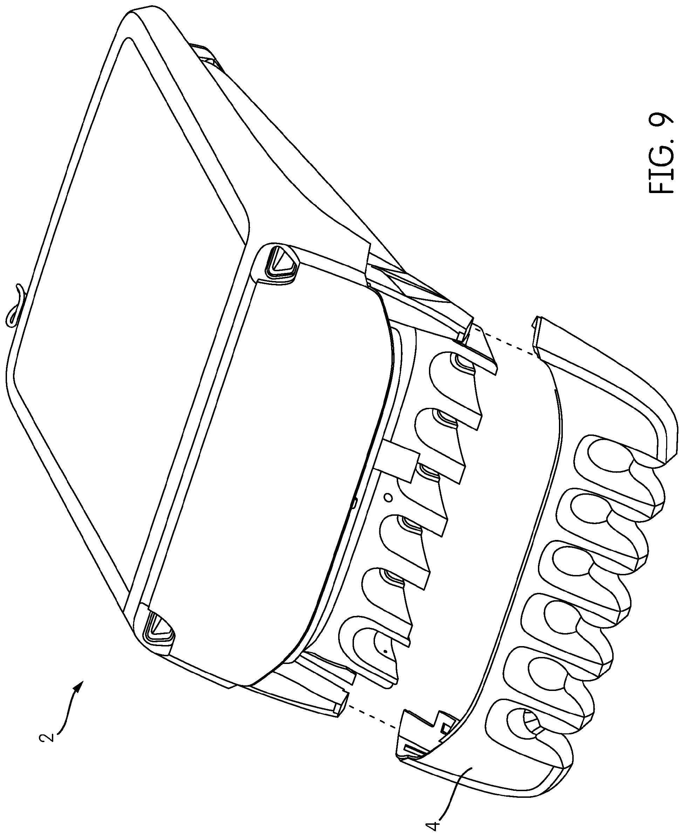

Wie in Abb. 1 gezeigt hat die dentale Behandlungseinheit (1) vorzugsweise ein bewegliches Arztelement (2). Wie in Abb. 2 und 3 gezeigt hat das Arztelement (2) zwei entnehmbare Griffe (3) zum Bewegen desselben. Wie in Abb. 9 gezeigt hat das Arztelement (2) auch eine entnehmbare Instrumentenablage (4) zum Ablegen von Instrumenten (5).

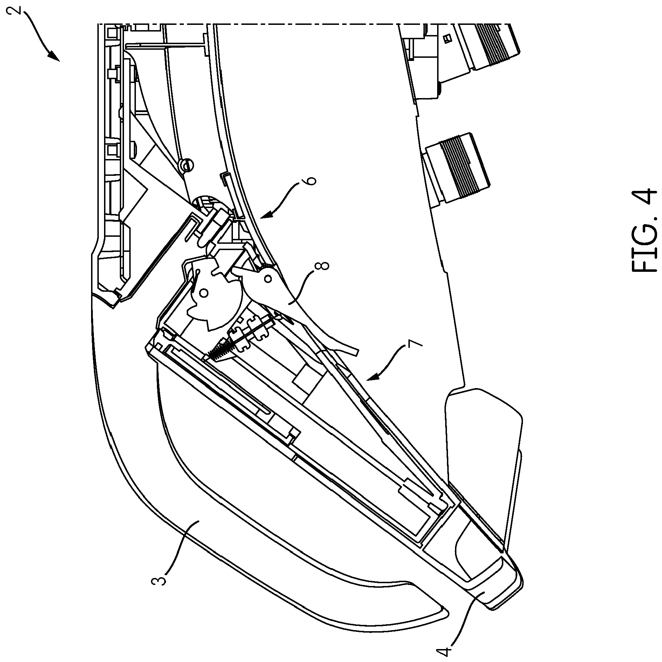

Wie in Abb. 4 gezeigt umfasst das Arztelement (2) auf jeder Seite einen ersten Entriegelungsmechanismus (6) zum Entriegeln des Griffs (3) und einen zweiten Entriegelungsmechanismus (7) zum Entriegeln der Instrumentenablage (4).

### Ent- und Verriegelung der Griffe

Wie in Abb. 4 bis 6 gezeigt, hat das Arztelement (2) ein bewegliches Betätigungselement (8), welches in einer vorbestimmenden Richtung (P) bewegt werden kann, um den ersten Entriegelungsmechanismus (6) zu betätigen und den Griff (3) zu entriegeln. Das Betätigungselement (8) befindet sich auf der vom Griff (3) abgewandte Unterseite des Arztelements (2).

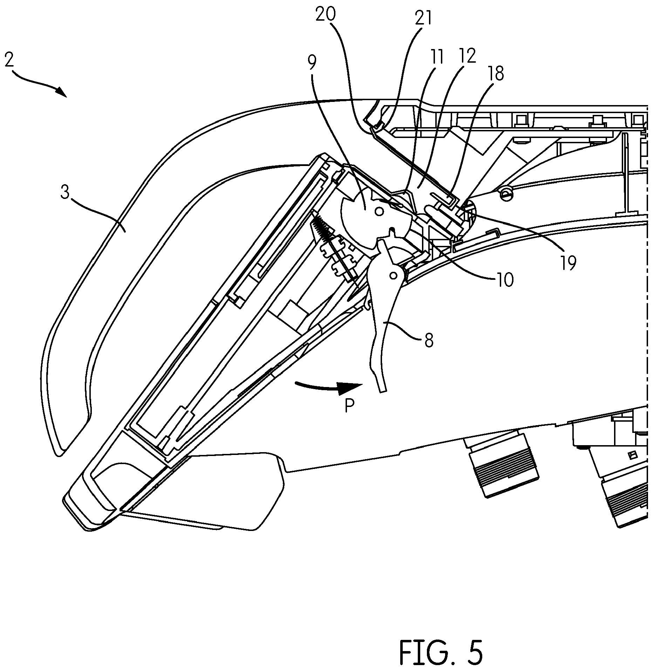

Wie in Abb. 5 gezeigt, hat der erster Entriegelungsmechanismus (5) eine Torsionsnocke (9) mit einer Rastnase (10). Es befindet sich eine Einrastkerbe (11) auf dem Griffschaft (12). Wenn das Betätigungselement (8) entlang der vorbestimmenden Richtung (P) bewegt wird, dreht es die federgespannte Torsionsnocke (9), so dass die Rastnase (10) derselben aus der Einrastkerbe (11) des Griffschafts (12) herausgelöst wird. In dem verriegelten Zustand ist die Verrastung durch die federgespannte Torsionsnocke selbstverstärkend, so dass ein bloßes Herausziehen des Griffschafts (12) nicht möglich ist. Wie in Abb. 3 gezeigt, ist der Griff (3) ohne bewegte Teile bereitgestellt. Somit ist eine werkzeuglose- und einhändige Bedienung bei der Verrastung bzw. Entriegelung möglich. Die Griffaufnahme (30), in dem der Griffschaft (12) eingesteckt wird, ist im Inneren des Arztelements (2) und nicht exponiert somit geschützt.

Wie in Abb. 5 gezeigt hat die Kontaktfläche der Rastnase (10) auf der Torsionsnocke (9) zum Kontaktieren der Einrastkerbe (11) auf dem Griffschaft (12) eine gebogene Form, um das Spiel im verriegelten Zustand des Griffs (3) zum Reduzieren. Für das Fügen und Lösen des Griffs (12) vom Arztelement (2) ist ein Montagespiel notwendig, um ein störendes Klemmen während des Fügens/Lösens zu verhindern. Andererseits muss im gefügten Zustand dieses Spiel auf ein Minimum reduziert sein. Die oben genannte Rastmechanik ermöglicht, dass die Toleranzen der beteiligten Bauteile sowie Montagetoleranzen in dem möglichen Bereich keinen Einfluss auf den festen Sitz des gefügten Griffs (12) haben. Für eine ergonomische, sichere Handhabung des Griffs (12) und für eine genaue Positionierung des Arztelements (2) ist eine möglichst starre und solide Verbindung zwischen Griff (12) und Kopf des Arztelement (2) notwendig. Dies wird durch die oben genannte Rastmechanik ermöglicht.

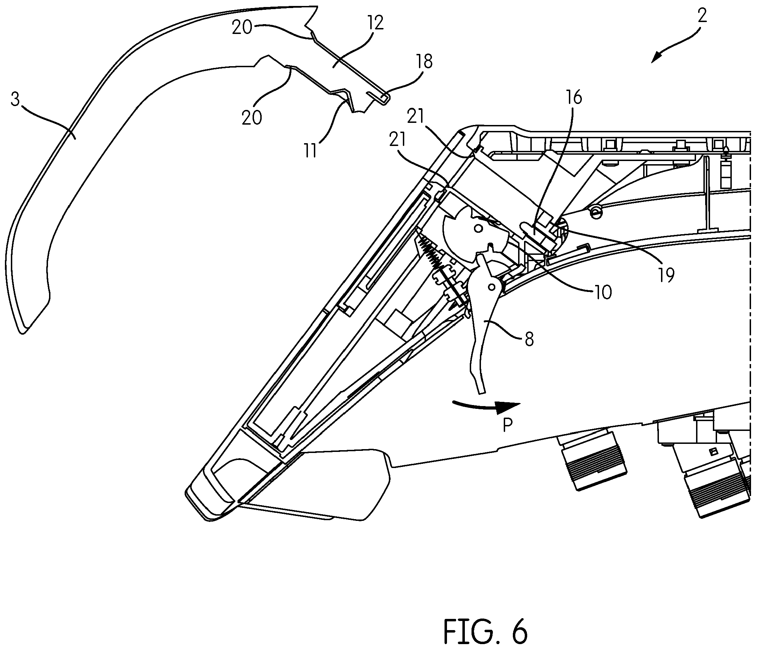

Wie in Abb. 6 gezeigt, hat der erster Entriegelungsmechanismus (6) ein Federelement (16), das den Griffschaft (12) zur Entriegelungsposition drückt um den Griff (3) beim entriegelten Zustand herauszuwerfen.

Wie in Abb. 5 und 6 gezeigt, hat der Griffschaft (12) einen Vorsprung (18), der beim verriegelten Zustand des Griffs (3) in eine Aussprung (19) im Arztelement (2) formschlüssig eindringt.

Wie in Abb. 4 gezeigt, hat der Griffschaft (11) einen konischen Wand Teil (20), der beim verriegelten Zustand des Griffs (3) auf einen entsprechenden Gegenwand Teil (21) im Arztelement (2) formschlüssig aufsitzt.

### Ent- und Verriegelung der Instrumentenablage

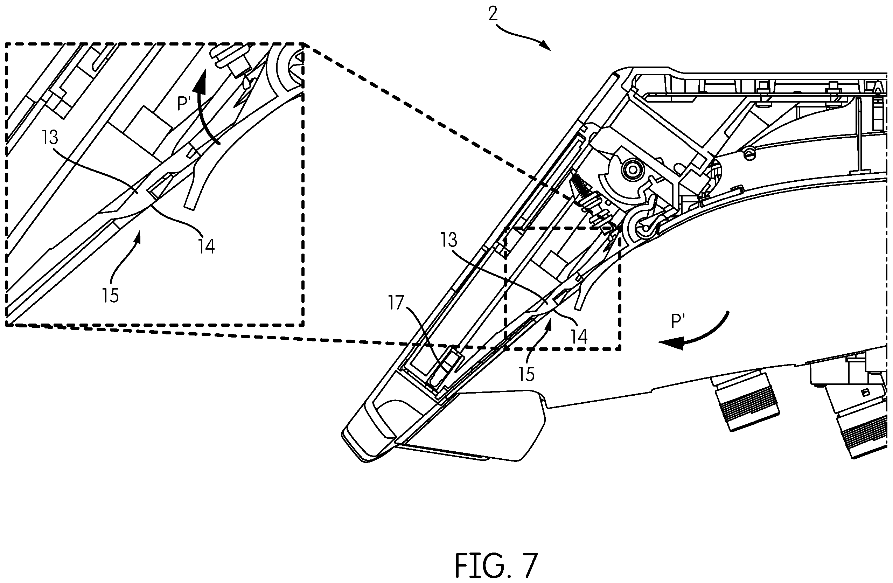

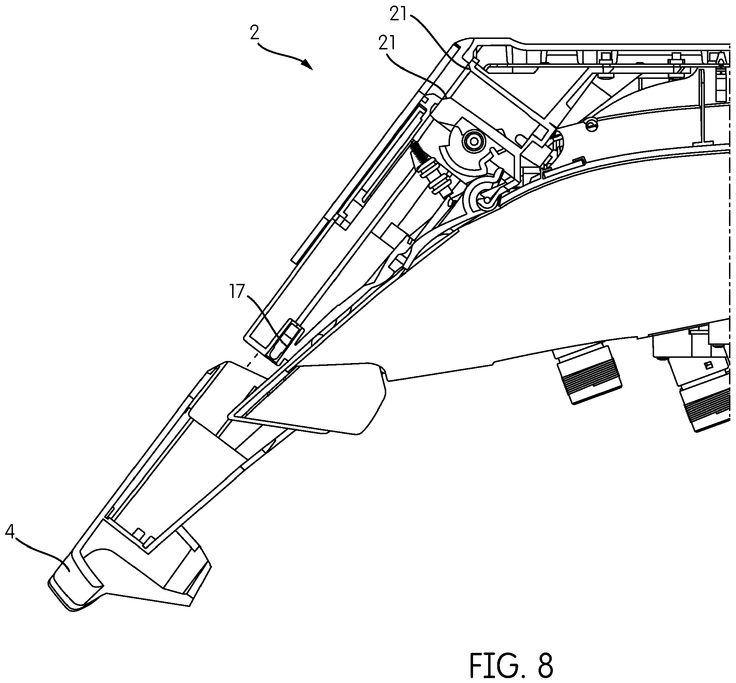

Wie in Abb. 7 und 8 kann der bewegliche Betätigungselement (8), in einer der vorbestimmenden Richtung (P) entgegen gesetzten Richtung (P') bewegt werden, um den zweiten Entriegelungsmechanismus (7) zu betätigen und die Instrumentenablage (4) zu entriegeln.

Wie in Abb. 7 bis 8 gezeigt, hat der zweite Entriegelungsmechanismus (6) ein Biegeelement (13) mit einer Rastnase (14). Es befindet sich eine Einrastöffnung (15) an der Instrumentenablage (4). Wenn das Betätigungselement (8) entlang der entgegengesetzten Richtung (P') bewegt wird, dehnt es das Biegeelement (13), so dass die Rastnase (14) derselben aus der Einrastöffnung (15) der Instrumentenablage (4) herausgelöst wird.

Wie in Abb. 8 gezeigt, hat der zweiter Entriegelungsmechanismus (7) ein Federelement (17), dass die Instrumentenablage (4) zur Entriegelungsposition drückt um die Instrumentenablage (4) beim entriegelten Zustand herauszuwerfen.

Griffe (3) und auch die Ablage (4) sind vorzugsweise im Zustand vor der Montage thermodesinfiziert und hygienisch einwandfrei. Sowohl bei der Montage des Griffs (3) und der Ablage (4) müssen nur Griff (3) und Ablage (4) berührt werden für ein solide Montage beider Elemente am Arztelement (2). Somit sind keine zusätzliche/gleichzeitige händische Betätigung der Entriegelungsmechanismen erforderlich. Diese Tatsache bietet eine hygienischen Vorteil, da keine Kontamination durch Berührung anderer Elemente gegeben ist. Die Verrastung erfolgt selbsttätig einfach in dem die Griffe (3) in die Aufnahme (30) gesteckt wird und indem die Ablage (4) über das Biegeelement (13) geschoben wird.

## Patentansprüche

1. Dentale Behandlungseinheit (1) mit einem beweglichen Arztelement (2) umfassend:
mindestens einen entnehmbaren Griff (3) zum Bewegen des Arztelements (2);
eine entnehmbare Instrumentenablage (4) zum Ablegen von Instrumenten (5);
ein erster Entriegelungsmechanismus (6) zum Entriegeln des Griffs (3);
ein zweiter Entriegelungsmechanismus (7) zum Entriegeln der Instrumentenablage (4);
**gekennzeichnet dadurch, dass**
das Arztelement (2) ein bewegliches Betätigungselement (8) aufweist, welches in einer vorbestimmenden Richtung (P) bewegt werden kann, um den ersten Entriegelungsmechanismus (6) zu betätigen und den Griff (3) zu entriegeln, und in einer, der vorbestimmten Richtung (P) entgegen gesetzte Richtung (P') bewegt werden kann, um den zweiten Entriegelungsmechanismus (7) zu betätigen und die Instrumentenablage (4) zu entriegeln.

2. Dentale Behandlungseinheit (1) nach Anspruch 1, **gekennzeichnet dadurch, dass** der erster Entriegelungsmechanismus (6) eine federgespannte Torsionsnocke (9) mit einer Rastnase (10) und eine Einrastkerbe (11) am Griffschaft (12) aufweist, wobei das Betätigungselement (8) angeordnet ist bei Betätigung entlang der vorbestimmenden Richtung (P) die Torsionsnocke (9) zu drehen, so dass die Rastnase (10) derselben aus der Einrastkerbe (11) des Griffschafts (12) herausgelöst wird.

3. Dentale Behandlungseinheit (1) nach Anspruch 2, **gekennzeichnet dadurch, dass** die Kontaktfläche der Rastnase (10) auf der Torsionsnocke (9) zur Einrastkerbe (11) auf dem Griffschaft (12) eine gebogene Form aufweist.

4. Dentale Behandlungseinheit (1) nach einem der vorangegangenen Ansprüche,
**gekennzeichnet dadurch, dass** der zweite Entriegelungsmechanismus (7) ein Biegeelement (13) mit einer Rastnase (14), und eine Einrastöffnung (15) an der Instrumentenablage (4) aufweist, wobei das Betätigungselement (8) angeordnet ist bei Betätigung entlang der zur vorbestimmenden Richtung (P) entgegen gesetzten Richtung (P') das Biegeelement (13) zu dehnen, so dass die Rastnase (14) derselben aus der Einrastöffnung (15) der Instrumentenablage (4) herausgelöst wird.

5. Dentale Behandlungseinheit (1) nach einem der vorangegangenen Ansprüche, **gekennzeichnet dadurch, dass** der erster Entriegelungsmechanismus (6) ein Federelement (16) hat, das den Griffschaft (12) zur Entriegelungsposition drückt, um den Griff (3) beim entriegelten Zustand auszuwerfen.

6. Dentale Behandlungseinheit (1) nach einem der vorangegangenen Ansprüche, **gekennzeichnet dadurch, dass** der zweiter Entriegelungsmechanismus (7) ein Federelement (17) hat, dass die Instrumentenablage (4) zur Entriegelungsposition drückt um die Instrumentenablage (4) beim entriegelten Zustand herauszuwerfen.

7. Dentale Behandlungseinheit (1) nach einem der vorangegangenen Ansprüche, **gekennzeichnet dadurch, dass** der Griffschaft (21) einen Vorsprung (18) hat, der beim verriegelten Zustand des Griffs (3) in eine Aussprung (19) im Arztelement (2) formschlüssig eindringt.

8. Dentale Behandlungseinheit (1) nach einem der vorangegangenen Ansprüche, **gekennzeichnet dadurch, dass** der Griffschaft (12) einen konischen Wand Teil (20) hat, der beim verriegelten Zustand des Griffs (3) auf einen entsprechenden Gegenwand Teil (21) im Arztelement (2) formschlüssig aufsitzt.

9. Dentale Behandlungseinheit (1) nach einem der vorangegangenen Ansprüche, **gekennzeichnet dadurch, dass** das Betätigungselement (8) auf der vom Griff (3) abgewandten Unterseite des Arztelements (2) angeordnet ist.
